Europäisches Patentamt

(19) European Patent Office

Office européen des brevets

(11) Publication number: **0 001 903**
**B1**

(12) **EUROPEAN PATENT SPECIFICATION**

(45) Date of publication of patent specification: **21.10.81**

(21) Application number: **78300549.9**

(22) Date of filing: **26.10.78**

(51) Int. Cl.³: **B 01 F 3/04, G 21 C 15/00, G 05 D 11/02**

54 Method of and apparatus for introducing gas into the coolant liquid of nuclear reactors.

(30) Priority: **27.10.77 DE 2748159**

(43) Date of publication of application:
**16.05.79 Bulletin 79/10**

(45) Publication of the grant of the European patent:
**21.10.81 Bulletin 81/42**

(84) Designated Contracting States:
**BE FR GB LU NL**

(56) References cited:
**FR - A - 2 285 172**
**FR - A - 2 339 431**
**GB - A - 694 918**
**US - A - 2 937 981**
**US - A - 3 124 518**

(73) Proprietor: **BROWN BOVERI REAKTOR GmbH**
**Heppenheimerstrasse 27-29**
**D-6800 Mannheim 31 (DE)**

(72) Inventor: **Stiefel, Max**
**Thüringerstrasse 69**
**D-6800 Mannheim 31 (DE)**
Inventor: **Wolfbeiss, Erich**
**Drachenrebenweg 12**
**D-7505 Ettlingen (DE)**

(74) Representative: **Cotter, Ivan John et al,**
**D. YOUNG & CO. 10 Staple Inn**
**London WC1V 7RD (GB)**

Courier Press, Leamington Spa, England.

# Method of and apparatus for introducing gas into the coolant liquid of nuclear reactors

This invention relates to a method of and apparatus for introducing gas into the reactor coolant liquid of pressurised water nuclear power plants.

It is not uncommon in nuclear plants to introduce hydrogen gas into primary coolant water by spraying the primary coolant into a hydrogen atmosphere, e.g. into a hydrogen gas blanket of a makeup tank, or by bubbling hydrogen gas into a water phase of the makeup tank. The makeup tank, among other things, is used to equalise primary coolant volume changes, and contains both the primary coolant and the hydrogen-gas blanket.

These known methods have the disadvantage that due to the large hydrogen volume in the makeup tank, a release of relatively large hydrogen volumes into the space surrounding the makeup tank is possible, and therefore the occurrence of combustible gas explosions must be taken into account. Further, the gas/water concentration cannot be precisely controlled.

French Patent Application Publication No. 2 285 172 discloses the introduction of hydrogen gas into water destined to be used as reactor coolant liquid for a nuclear reactor. The water passes through a tubular container or cell that has a water inlet and the gas is introduced in a controlled manner via a conduit into the liquid within the container. The French Patent Publication teaches that the direct injection of gas into the reactor coolant liquid circuit or into a tank containing the liquid is subject to certain disadvantages and resorts to the alternative approach of diffusing the gas into the water within the container.

There is still a need, therefore, to find a method of injecting gas into the reactor coolant liquid for pressurised water nuclear power plants, by which a predetermined gas concentration can be reached in the liquid and by which the potential release of dangerous volumes of explosive gas can be minimised.

According to the invention the above need is satisfied by a method of introducing gas into the reactor coolant liquid for pressurised water nuclear power plants, wherein the liquid is passed through a container that has a liquid inlet and the gas is introduced into the liquid within the container in a manner to provide a predetermined gas concentration in the liquid, characterised in that the reactor coolant liquid is passed through a container in the form of a bubble column, the gas is injected into the reactor coolant liquid passing through the bubble column above the liquid inlet, and the gas and liquid are mixed prior to leaving the bubble column.

The invention also provides apparatus for introducing gas into the reactor coolant liquid for pressurised water nuclear power plants, the apparatus comprising a container, means to cause the liquid to pass through the container, a gas conduit within the container to direct gas into the container, and means to control the flow of gas into the container, characterised in that the container is a bubble column, jet nozzles are provided within the column to inject the gas into the reactor coolant liquid passing through the bubble column, and a plurality of static mixers are provided within the column to mix the gas and liquid.

In accordance with a preferred embodiment of the invention described in more detail below, the nozzles can be flushed with the aid of a bypass flow of the liquid to be gassed. To this end, a by-pass liquid flow conduit is divided into two conduits that are connected to a pair of the gas injection conduits within the bubble column, which are in the form of pipe sections that support the nozzles. Isolation valves in the two bypass flow conduits can be manipulated to enable the nozzles to be alternately supplied with gas and flushing liquid. Flushing of the nozzles is desirable in that the reactor coolant liquid is a salt solution, whereby there is a danger of closure of one or more of the nozzles due to precipitation arising from local solubility excess.

In the preferred embodiment, a ventilation conduit is connected to the bubble column in order to prevent gas bubble formation in the liquid. Analysis measuring devices are installed in the liquid line upstream and downstream of the bubble column to measure the gas concentration. The gas volume injected depends upon the pre-existing gas concentration of the liquid to be injected with gas, and the head of the liquid flow.

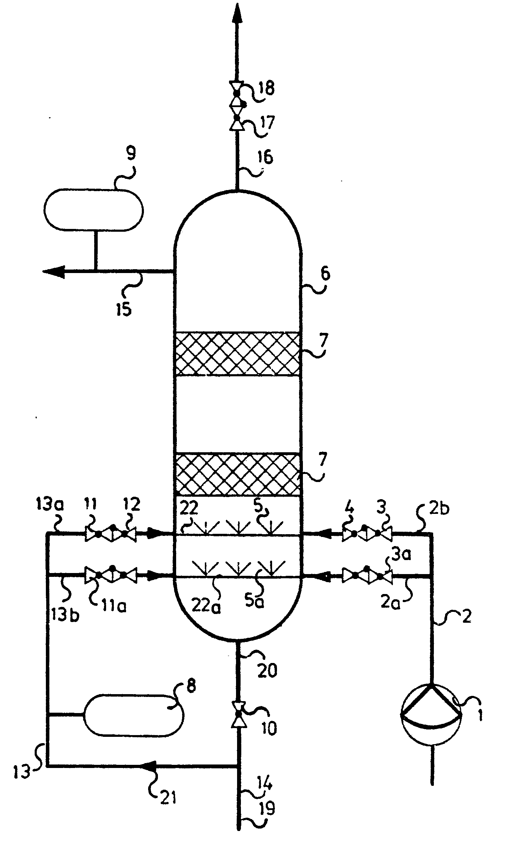

The invention will now be further described, by way of example, with reference to the accompanying schematic drawings, the sole figure of which depicts a method and apparatus embodying the invention.

Referring to the drawing, primary coolant water, to be injected with gas, flows into a pressurised water reactor system (not shown) via a line 14 in the direction of an arrow 19 and, after the adjustment of the volume flow at a control valve 10, flows into a bubble column 6 at a liquid inlet 20. With the aid of a gas metering, proportioning or dosage equipment, e.g. a gas dosage or proportioning pump 1, hydrogen gas in a conduit 2 is channelled into the bubble column 6 and is injected above the liquid inlet 20 via either one of two gas injection conduits 2a and 2b and either of two sets of jet nozzles 5 and 5a. The conduits 2a, 2b are fitted with respective isolation valves 3a, 3. The nozzles 5 are supported and connected together and to the conduit 2b by a gas injection conduit 22 within the bubble column 6. The nozzles 5a are supported and connected together and to the conduit 2a by a gas injection conduit 22a within the bubble column 6. The conduits 22, 22a are parallel.

Hydrogen gas and primary coolant are now intensively mixed when liquid flows through static mixers 7 enclosed by the bubble column 6. After the liquid has flowed through the mixers 7, the primary coolant, which has been provided with the desired hydrogen content, discharges from the bubble column 6 through a conduit 15. Automatic ventilation through a conduit 16, a float valve 17 and an isolation valve 18 ensures that no gas bubbles remain in the primary coolant. A bypass conduit 13, in which a certain portion of the primary coolant that is to be injected with gas flows in the direction of an arrow 21, branches off from the conduit 14 and is divided into twin coolant injection conduits 13a, 13b fitted with respective isolation valves 11, 11a. The conduits 13a, 13b are connected to the conduits 22, 22a, respectively.

The mode of operation of the apparatus enables the nozzles 5, 5a to be alternately flushed or used for gas injection. To flush the nozzles 5, the isolation valves 3 and 11a are closed and the isolation valves 11 and 3a are opened, whereby coolant flows through the nozzles 5 to flush them and gas is injected through the nozzles 5a. To flush the nozzles 5a the isolation valves 3a and 11 are closed and the isolation valves 11a and 3 are opened, whereby coolant flows through the nozzles 5a to flush them and gas is injected through the nozzles 5. Check valves 4 and 12 prevent gas or flushing liquid from returning to their respective sources.

An analysis measuring device 8 is installed in the bypass conduit to measure the hydrogen gas concentration of the liquid to be injected with gas so that exact gas dosing can be accomplished through the gas dosage pump 1 as a function of gas content and liquid volume in the conduit 14. A further analysis measuring device 9 is installed in the conduit 15 to measure the hydrogen gas concentration of the gassed liquid leaving the bubble column 6.

It should be noted that the entire gassing and flushing process takes place automatically.

The above-described embodiment of the invention enables liquids to be injected with gas in a simplified and advantageous manner. Nitrogen, moreover, can be used as a gas blanket for the makeup tank, in order to avoid the danger of a combustible gas explosion.

An additional advantage of the above-described embodiment of the invention is the fact that the hydrogen concentration of the primary coolant reinjected into the reactor can be kept within a specified range during load change processes.

## Claims

1. A method of introducing gas into the reactor coolant liquid of pressurised water nuclear power plants, wherein the liquid is passed through a container that has a liquid inlet (20) and the gas is introduced into the liquid within the container in a manner to provide a predetermined gas concentration in the liquid, characterised in that the reactor coolant liquid is passed through container in the form of a bubble column (6), the gas is injected into the reactor coolant liquid passing through the bubble column (6) above the liquid inlet (20), and the gas and liquid are mixed prior to leaving the bubble column (6).

2. Apparatus for introducing gas into the reactor coolant liquid of pressurised water nuclear power plants, the apparatus comprising a container, means to cause the liquid to pass through the container, a gas conduit (22, 22a) within the container to direct gas into the container, and means (1) to control the flow of gas into the container, characterised in that the container is a bubble column (6), jet nozzles (5, 5a) are provided within the column (6) to inject the gas into the reactor coolant liquid passing through the bubble column (6), and a plurality of static mixers (7) are provided within the column (6) to mix the gas and liquid.

3. Apparatus according to claim 2, comprising a bypass flow conduit (13) for flushing the nozzles (5, 5a) with the liquid into which the gas is to be injected.

4. Apparatus according to claim 3, comprising a pair of the gas injection conduits (22, 22a) and isolation valves (3, 3a, 11, 11a) for selectively controlling the reactor coolant liquid flow through the bypass flow conduit (13) and the gas injection conduits (22, 22a) in order to alternately supply gas and flushing liquid to the nozzles (5, 5a).

5. Apparatus according to claim 2, claim 3 or claim 4, comprising a vent conduit (16) to eliminate gas bubbles from the reactor coolant liquid.

6. Apparatus according to any one of claims 2 to 5, comprising gas analysis measuring means (8, 9) for measuring the gas concentration in the reactor coolant liquid.

## Patentansprüche

1. Verfahren zur Einführung von Gas in die Reaktorkühlflüssigkeit von Druckwasser-Kernkraftanlagen, worin die Flüssigkeit durch einen Behälter, der einen Flüssigkeitseinlaß (20) besitzt, geführt und das Gas in die Flüssigkeit in dem Behälter in solcher Weise eingeführt wird, daß man eine vorbestimmte Gaskonzentration in der Flüssigkeit bekommt, dadurch gekennzeichnet, daß die Reaktorkühlflüssigkeit durch einen Behälter in der Form einer Blasensäule (6) geführt wird, das Gas in die durch die Blasensäule (6) gehende Reaktorkühlflüssigkeit oberhalb des Flüssigkeitseinlasses (20) eingespritzt wird und das Gas und die Flüssigkeit vor Verlassen der Blasensäule (6) gemischt werden.

2. Apparatur zur Einführung von Gas in die Reaktorkühlflüssigkeit von Druckwasser-Kernkraftanlagen mit einem Behälter, einer Einrichtung, die die Flüssigkeit durch den Behälter gehen läßt, einer Gasleitung (22, 22a) in dem Behälter, die Gas in den Behälter führt, und einer Einrichtung (1), die den Gasfluß in den Behälter steuert, dadurch gekennzeichnet, daß der Behälter eine Blasensäule (6) ist, Strahldüsen (5, 5a) in der Säule (6) so angeordnet sind, daß sie das Gas in die durch die Blasensäule (6) gehende Reaktorkühlflüssigkeit einspritzen, und mehrere statische Mischer (7) in der Säule (6) so angeordnet sind, daß sie das Gas und die Flüssigkeit mischen.

3. Apparatur nach Anspruch 2 mit einer Bypaßstromleitung (13) für das Spülen der Düsen (5, 5a) mit der Flüssigkeit, in die das Gas eingespritzt werden soll.

4. Apparatur nach Anspruch 3 mit einem Paar der Gaseinspritzleitungen (22, 22a) und Absperrventilen (3, 3a, 11, 11a) für eine selektive Steuerung des Reaktorkühlflüssigkeitsstromes durch die Bypaßstromleitung (13) und der Gaseinspritzleitungen (22, 22a), um alternativ Gas und Spülflüssigkeit den Düsen (5, 5a) zuzuführen.

5. Apparatur nach Anspruch 2, Anspruch 3 oder Anspruch 4 mit einer Entlüftungsleitung (16), die Gasblasen aus der Reaktorkühlflüssigkeit entfernt.

6. Apparatur nach einem der Ansprüche 2 bis 5 mit einer Gasanalysenmeßeinrichtung (8, 9) zur Messung der Gaskonzentration in der Reaktorkühlflüssigkeit.

**Revendications**

1. Procédé d'introduction de gaz dans le liquide réfrigérant de réacteur de centrales nucléaires à eau sous pression, dans lequel le liquide est envoyé à travers un récipient qui comporte une entrée de liquide (20) et le gaz est introduit dans le liquide à l'intérieur du récipient de manière à fournir une concentration de gaz prédéterminée dans le liquide, caractérisé en ce que le liquide réfrigérant de réacteur est envoyé à travers un récipient sous la forme d'une colonne de barbotage (6), le gaz est injecté dans le liquide réfrigérant de réacteur en train de traverser la colonne de barbotage (6) au-dessus de l'entrée de liquide (20), et le gaz et le liquide sont mélangés avant de quitter la colonne de barbotage (6).

2. Appareil pour l'introduction de gaz dans le liquide réfrigérant de réacteur de centrales nucléaires à eau sous pression, l'appareil comprenant un récipient, des moyens pour faire en sorte que le liquide traverse le récipient, un conduit de gaz (22, 22a) intérieur au récipient pour diriger du gaz dans le récipient, et un moyen (1) pour régler le débit de pénétration de gaz dans le récipient, caractérisé en ce que le récipient est une colonne de barbotage (6), des injecteurs (5, 5a) sont prévus dans la colonne (6) pour injecter le gaz dans le liquide réfrigérant de réacteur qui traverse la colonne de barbotage (6), et une pluralité de mélangeurs statiques (7) sont prévus dans la colonne (6) pour mélanger le gaz et le liquide.

3. Appareil selon la revendication 2, comprenant un conduit d'écoulement dérivé (13) pour laver les injecteurs (5, 5a) avec le liquide dans lequel le gaz est à injecter.

4. Appareil selon la revendication 3, comprenant une paire des conduits d'injection de gaz (22, 22a) et des valves d'isolation (3, 3a, 11, 11a) pour commander sélectivement l'écoulement du liquide réfrigérant de réacteur à travers le conduit d'écoulement dérivé (13) et les conduits d'injection de gaz (22, 22a) en vue d'envoyer alternativement du gaz et du liquide de lavage aux injecteurs (5, 5a).

5. Appareil selon la revendication 2, la revendication 3 ou la revendication 4, comprenant un conduit de mise à l'atmosphère (16) pour éliminer les bulles de gaz du liquide réfrigérant de réacteur.

6. Appareil selon l'une quelconque des revendications 2 à 5, comprenant des moyens de mesure d'analyse de gaz (8, 9) pour mesurer la concentration en gaz du liquide réfrigérant de réacteur.